Europäisches Patentamt

European Patent Office

Office européen des brevets

(19)

(11) Numéro de publication: **0 218 538 B1**

(12) **FASCICULE DE BREVET EUROPEEN**

(45) Date de publication du fascicule du brevet:
04.10.89

(51) Int. Cl.⁴: **A01G 7/04**

(21) Numéro de dépôt: **86440072.6**

(22) Date de dépôt: **28.08.86**

(54) **Dispositif d'électroculture.**

(30) Priorité: **06.09.85 FR 8513373**

(43) Date de publication de la demande:
**15.04.87 Bulletin 87/16**

(45) Mention de la délivrance du brevet:
**04.10.89 Bulletin 89/40**

(84) Etats contractants désignés:
**AT BE CH DE GB IT LI LU NL SE**

(56) Documents cités:
**FR-A- 649 730**
**FR-A- 734 980**
**FR-A- 2 355 441**

(73) Titulaire: **Hangarter, Jean-Marie, 17, rue du Geisbourg,
F-68240 Kaysersberg(FR)**

(72) Inventeur: **Hangarter, Jean-Marie, 17, rue du Geisbourg,
F-68240 Kaysersberg(FR)**

(74) Mandataire: **Aubertin, François, Cabinet Lepage &
Aubertin Innovations et Prestations 4, rue de Haguenau,
F-67000 Strasbourg(FR)**

## Description

L'invention concerne un dispositif d'électroculture comportant au moins deux grilles ou panneaux disposés parallèlement dans le sol de culture selon une direction Nord-Sud, et une source de tension fournissant un courant électrique d'origine naturelle aux grilles métalliques.

Plusieurs dispositifs sont connus pour l'utilisation de l'effet bénéfique de l'électricité sur la végétation, qui est connu de longue date.

En effet, il a été constaté que l'électricité pouvait avoir une puissante action sur l'ascension de la sève dans les plantes, et par conséquent, sur le développement rapide et spectaculaire de celles-ci.

De nombreux dispositifs ont déjà été proposés pour soumettre des plantations à l'influence de l'électricité, principalement au niveau des racines. Le but de ces dispositifs connus consiste à capter de l'électricité de préférence naturelle, telle que l'électricité atmosphérique et à la canaliser vers les racines sous forme de courant électrique. Ainsi, selon l'un de ces dispositifs connus, une antenne de sept à huit mètres de haut est placée verticalement dans le sol et est surmontée, d'une part, par un ensemble de tiges en fil de fer galvanisé et, d'autre part, par un ensemble de tubes de cuivre ou de laiton. Chacun de ces ensembles d'éléments en fer galvanisé ou en cuivre est relié séparément à un fil conducteur qui descend le long de l'antenne verticale. Chacun des deux fils est ensuite enterré dans le sol à une profondeur de l'ordre de cinquante centimètres, et ceci en forme de nappe spiralée, de façon a définir un couple cuivre-fer. Ainsi, la spirale obtenue sert de piège aux lignes de force du champ magnétique, et il s'établit un courant continu sur la spirale, qui permet d'activer la croissance des plantes situées au-dessus de la nappe spiralée.

Ce dispositif a l'inconvénient d'être relativement onéreux, et demande en outre une réalisation particulièrement soignée comportant de nombreuses isolations et soudures. De plus, il nécessite une antenne de grande hauteur particulièrement inesthétique mais surtout, les résultats obtenus au niveau des plantations sont d'une grande irrégularité et sont essentiellement tributaires de la distribution des tensions électriques dans le sous-sol.

On connaît également un autre dispositif d'électroculture basé sur la collecte des courants atmosphériques, et composé d'une antenne métallique pourvue de brins de cuivre à sa partie supérieure. Cette antenne est isolée de la terre par l'intermédiaire d'un isolateur, mais est reliée à une grille en fer galvanisé placée verticalement dans le sol. En regard de cette grille en fer galvanisé, disposée selon une direction Nord-Sud, est placée une seconde grille identique mais reliée uniquement à la terre. De cette façon, les courants atmosphériques collectés par l'antenne sont transmis à la première grille citée, et il s'établit entre les deux grilles un champ électrique qui aboutit à la circulation d'un faible courant dans la partie du sol qui sépare les deux grilles, ce courant profitant à la croissance des végétaux placés sur son passage.

Cependant, ce dispositif se caractérise par son inefficacité, résultant en partie des faibles niveaux de courant et de tension observés, ainsi que des variations de ceux-ci.

Alors que les dispositifs d'électroculture précités se basent sur l'utilisation de l'électricité atmosphérique, qui est gratuite, d'autres dispositifs consistent à alimenter directement des grilles placées dans le sol par l'intermédiaire de générateurs électriques tels que piles ou autres, ce qui augmente considérablement le coût d'utilisation de ces dispositifs.

Enfin, certaines réalisations se basent sur une juxtaposition de bandes de compost acides et basiques disposées alternativement dans le sol, de façon à générer des courants électriques traversant les plate-bandes. Il est clair qu'il s'agit là d'une énergie électrique d'une utilisation plus coûteuse et qu'il faut périodiquement renouveler.

La présente invention a pour but de remédier à ces inconvénients. L'invention, telle qu'elle est caractérisée dans les revendications, résout le problème consistant à créer un dispositif d'électroculture comportant au moins deux grilles ou panneaux disposés parallèlement dans le sol de culture selon une direction Nord-Sud et une source de tension comportant une antenne fournissant un courant électrique d'origine naturelle aux grilles métalliques et dont la source de tension se compose, d'une part, de l'antenne de captage de l'électricité atmosphérique et, d'autre part, d'une ou de plusieurs cellules photovoltaïques.

Les avantages obtenus grâce à cette invention consistent essentiellement en ce que par suite de la présence des cellules photovoltaïques et d'un régulateur, le dispositif d'électroculture permet d'avoir même la nuit une tension électrique disponible sur la grille métallique positive, ce qui augmente la rentabilité du dispositif.

Un autre but de la présente invention est de proposer un mode de réalisation pratique, simple et efficace de dispositifs d'électroculture, tout en se basant sur une source d'énergie électrique entièrement gratuite.

Un autre but de la présente invention est de fournir un dispositif d'électroculture extrêmement économique, et qui permet de faire circuler dans les plats-bandes de culture, un courant continu relativement important par rapport à ceux obtenus par les dispositifs connus dans l'état actuel de la technique.

L'invention est exposée ci-après plus en détail à l'aide de dessins représentant seulement un mode d'exécution.

La figure 1 représente une vue en perspective de l'ensemble du dispositif d'électroculture selon l'invention.

La figure 2 est une vue en plan de l'antenne du dispositif tel que représenté figure 1.

La figure 3 est un schéma de principe du régulateur représenté dans le dispositif de la figure 1.

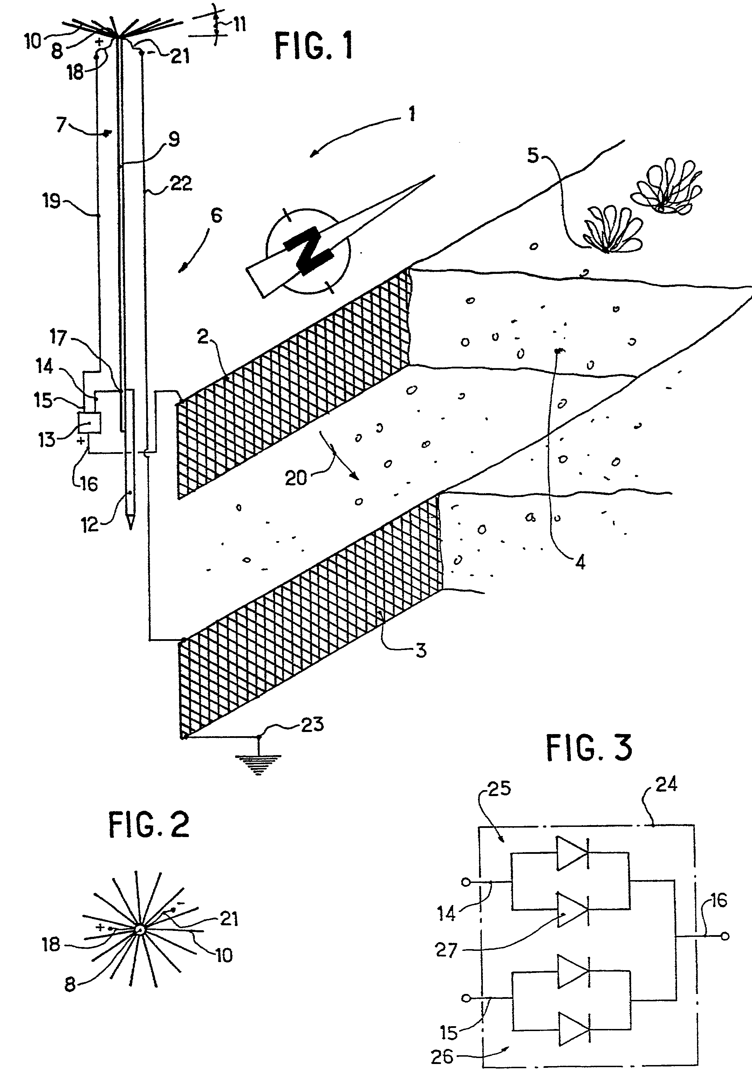

On se réfère à la figure 1.

Le dispositif d'électroculture 1 selon l'invention se compose principalement de deux grilles métalliques 2 et 3 d'une hauteur de trente à cinquante centimètres disposées parallèlement dans le sol de culture, de façon à délimiter latéralement une plate-bande de culture 4 destinée à la plantation et à la culture de végétaux quelconques 5.

Les grilles métalliques 2 et 3, de préférence en fer galvanisé, sont destinées de façon connue, à être portées à un potentiel électrique relatif de façon à faire circuler entre-elles un courant électrique limité par la résistance de terre de la plate-bande 4. Bien entendu, les grilles métalliques 2 et 3 peuvent être remplacées par des panneaux métalliques pleins assurant la même fonction.

Il est important de noter que les grilles métalliques 2 et 3, enfouies dans le sol, sont orientées selon une direction Nord-Sud, afin de faire bénéficier les charges électriques en mouvement entre les deux grilles, de l'influence du champ magnétique terrestre.

Le dispositif d'électroculture 1 selon l'invention comporte en outre une source de tension 6 connectée électriquement aux grilles 2 et 3, la première jouant le rôle d'un pôle positif, la seconde jouant le rôle d'un pôle négatif.

A cet effet, la source de tension 6 qui fournit un courant électrique d'origine naturelle aux grilles métalliques 2 et 3, se compose, d'une part, d'une antenne 7 permettant de capter l'électricité atmosphérique et, d'autre part, d'une ou de plusieurs cellules photovoltaïques 8 tel que représenté figure 2.

L'antenne 7 est destinée à capter l'électricité présente dans l'atmosphère sous forme d'ions, notamment par temps orageux. A cet effet, elle se compose d'un tube conducteur 9 en aluminium ou autre bon conducteur électrique, surmonté par des brins de fil de cuivre ou équivalent, disposés en "parasol" comme schématisé sur les figures 1 et 2. Ces brins de fil de cuivre 10, nécessairement en nombre impair, sont fixés sur le sommet du tube conducteur 9 par une liaison quelconque assurant une bonne continuité électrique, et sont répartis selon un cône de façon à présenter une inclinaison vers le haut 11 de quinze à trente degrés.

En outre, le tube conducteur 9 de l'antenne 7 est fixé sur un isola teur constitué par exemple par un piquet en bois 12 fiché dans le sol, l'ensemble de l'antenne 7 étant installé à proximité des grilles métalliques 2 et 3 afin de raccourcir les connexions électriques nécessaires.

Il est à noter que du point de vue du dimensionnement de cette antenne, plusieurs réalisations à la portée de l'Homme de Métier sont possibles. Il s'avère néanmoins qu'une antenne 7 composée d'un tube conducteur 9 de deux mètres de haut et de brins de cuivre d'une trentaine de centimètres de long et d'un diamètre de 2,5 à 3 millimètres est optimale.

Il est clair que l'antenne 7 captant l'électricité atmosphérique constitue en elle-même une source de tension, ladite tension pouvant être prélevée en un point quelconque du tube 9. Cependant, cette tension est essentiellement variable et fluctuante au rythme des variations des conditions atmosphériques, et son application à l'une des grilles métalliques 2 ou 3 ne donne pas de bons résultats en ce qui concerne la croissance des végétaux 5.

Aussi, selon l'invention, la source de tension 6 se compose en outre d'une ou de plusieurs cellules photovoltaïques 8 produisant une tension continue à partir de l'énergie lumineuse reçue par le soleil, les tensions respectives issues de l'antenne 7 et de cellules photovoltaïques 8 étant amenées sur la grille métallique 2 jouant le rôle de pôle positif, par l'intermédiaire d'un régulateur 13.

Ce régulateur 13 comporte deux entrées 14 et 15 et une sortie 16. Pour assurer le fonctionnement du dispositif d'électroculture tel que décrit précédemment, l'entrée 14 du régulateur 13 prélève la tension électrique produite par l'antenne 7 au niveau d'un point quelconque 17 du tube 9 de celle-ci. Par ailleurs, la tension positive produite par la cellule photovoltaïque 8 est prélevée au niveau de la borne positive 18 de celle-ci et est amenée sur l'entrée 15 du régulateur par l'intermédiaire d'un fil électrique isolé 19.

Bien entendu, pour qu'un courant puisse circuler dans le sens 20 représenté sur la figure 1, il est nécessaire que la sortie 16 du régulateur 13 soit connectée à la grille métallique 2 jouant le rôle de pôle positif, et qu'en outre la borne négative 21 de la cellule photovoltaïque 8 soit connectée par un fil électrique isolé 22 à la grille métallique 3 jouant le rôle de pôle négatif du dispositif. Ainsi, la grille métallique 2 étant portée à un potentiel électrique positif par rapport à la terre, et la grille métallique 3 étant intimement reliée à la terre par l'intermédiaire d'un piquet de terre 23, un courant électrique peut s'établir entre les deux grilles 2 et 3 dans le sens 20 représenté.

Selon l'invention, les meilleurs résultats d'électroculture sont obtenus lorsque la grille métallique 2 est alimentée par une tension continue de l'ordre de 0,2 à 0,4 volts. Le régulateur 13 conforme à l'invention permet d'obtenir une telle tension à partir des sources de tension élémentaires constituées par l'antenne 7 d'une part, et par la cellule photovoltaïque 8 d'autre part.

A cet effet, le régulateur 13 schématisé figure 3 comporte un étage redresseur 24 à faibles pertes destiné à fabriquer une tension continue de 0,2 à 0,4 volts à partir, d'une part, de la tension fluctuante délivrée par l'antenne 7, et d'autre part, de la tension sensiblement continue délivrée par la cellule photovoltaïque 8. De ce fait, l'étage redresseur 24 est constitué par deux groupes 25 et 26 de diodes 27 disposées en parallèle, et situées respectivement entre chaque entrée 14 et 15 et la sortie 16 du régulateur 13.

Il est à noter que les tensions délivrées par l'antenne 7 et par les cellules photovoltaïques 8 sont de valeurs relativement faibles, et de ce fait, il est nécessaire de limiter les chutes de tension à l'intérieur du régulateur 13 à leur plus simple expression. Aussi, les diodes 27 sont elles de préférence constituées par des diodes "signal" au germanium, à faibles pertes. Il est également remarquable que la disposition de deux ou plusieurs diodes 27 en parallèle entre une entrée 14 ou 15 et la sortie 16 du régulateur 13 permet de limiter la résistance équivalente de chaque ensemble de diodes en parallèle, et par conséquent de limiter les chutes de tension.

Afin de rendre l'ensemble de la source de tension 6 aussi compact que possible, la cellule photovoltaïque 8 peut être judicieusement placée au sommet du tube 9 de l'antenne 7 tel que représenté sur les figures 1 et 2.

Bien entendu, l'écartement des grilles métalliques 2 et 3 dépend de la résistance du sol dans la région de culture, et le nombre et la dimension des grilles métalliques 2 et 3, ainsi que le nombre de cellules photovoltaïques 8 et d'antennes 7 nécessaires par surface de culture sont entièrement à la portée de l'Homme de Métier.

Parmi les avantages du dispositif d'électroculture décrit précédemment, on peut remarquer que la présence des cellules photovoltaïques 8 ainsi que du régulateur 13 permettent d'avoir toujours une tension électrique disponible sur la grille métallique positive 2, même si pour une raison ou une autre l'une des deux sources de tension reste muette, ce qui est le cas chaque nuit pour la cellule photovoltaïque 8.

Par ailleurs, le dispositif d'électroculture conforme à l'invention est très simple et compact tout en donnant des résultats spectaculaires, et permet de mettre une électroculture rentable et efficace au service de n'importe quel jardinier, qui pourra, de ce fait, se passer des engrais chimiques.

## Revendications

1. Dispositif d'électroculture comportant au moins deux grilles ou panneaux métalliques (2, 3) disposés parallèlement dans le sol de culture (4) selon une direction Nord-Sud, et une source de tension (6) comportant une antenne (7) fournissant un courant électrique d'origine naturelle aux grilles métalliques (2, 3), dispositif d'électroculture caractérisé par le fait que ladite source de tension (6) se compose d'une part de l'antenne (7) de captage de l'électricité atmosphérique, et d'autre part, d'une ou de plusieurs cellules photovoltaïques (8).

2. Dispositif d'électroculture selon la revendication 1, caractérisé par le fait que les tensions délivrées par l'antenne (7), d'une part, et par la cellule photovoltaïque (8), d'autre part, sont appliquées à la première grille (2) positive par l'intermédiaire d'un régulateur (13), la seconde grille (3) étant reliée intimement à la terre par l'intermédiaire d'un piquet de terre (23).

3. Dispositif d'électroculture selon la revendication 2, caractérisé par le fait que l'antenne (7) se compose d'un tube conducteur (9) surmonté par des brins de fil de cuivre (10) disposés en "parasol", ledit tube conducteur (9) étant électriquement séparé de la terre par un isolateur (12).

4. Dispositif d'électroculture selon la revendication 2, caractérisé par le fait que le régulateur (13) comporte deux entrées (14) et (15) et une sortie (16), l'entrée (15) étant connectée à la borne positive (18) de la cellule photovoltaïque (8), l'entrée (14) étant connectée au tube conducteur (9) de l'antenne (7), et la sortie (16) étant reliée à la grille positive (2) du dispositif.

5. Dispositif d'électroculture selon la revendication 2, caractérisé par le fait que la borne négative (21) de la cellule photovoltaïque (8) est connectée à la seconde grille négative (3) reliée à la terre.

6. Dispositif d'électroculture selon la revendication 2, caractérisé par le fait que le régulateur (13) comporte un étage redresseur (24) à faibles pertes.

7. Dispositif d'électroculture selon la revendication 2, caractérisé par le fait que la cellule photovoltaïque (8) est disposée au sommet de l'antenne (7) entre les brins de fil de cuivre (10).

8. Dispositif d'électroculture selon la revendication 6, caractérisé par le fait que ledit étage redresseur (24) est constitué par deux groupes (25, 26) de diodes (27) disposées en parallèle, et situées respectivement entre chaque entrée (14) et (15) et la sortie (16) dudit régulateur (13).

9. Dispositif d'électroculture selon la revendication 8, caractérisé par le fait que lesdites diodes (27) sont des diodes "signal" à faibles pertes, au germanium.

10. Dispositif d'électroculture selon la revendication 7, caractérisé par le fait que les brins de fil de cuivre (10) ont un diamètre compris entre 2,5 et 3 millimètres.

## Claims

1. Device for electroculture with minimum two metal grates or plates (2, 3) arranged in parallel in the cultivated soil (4), in a north-south direction, and with a voltage source (6) with an antenna (7) and that supplies the metal grates (2, 3) with an electric current of natural origin, device for electroculture characterized in that the aforesaid voltage source (6) consists, on one hand, of the antenna (7) for collecting atmospheric electricity and, on the other hand, of one or several photocells (8).

2. Device for electroculture according to claim 1, characterized in that the voltages delivered by the antenna (7), on one hand, and by the photocell (8), on the other, are being applied to the first positive grate (2) through the intermediary of a regulator (13), while the second grate (3) is linked closely with the soil through the intermediary of an earth rod (23).

3. Device for electroculture according to claim 2, characterized in that the antenna (7) consists of a tubular conductor (9) topped by copper wire strands (10) arranged "parasol-like", with the aforesaid tubular conductor (9) separated electrically from the soil by an insulator (12).

4. Device for electroculture according to claim 2, characterized in that the regulator (13) has two inlets (14) and (15) and one outlet (16), with the inlet (15) connected to the positive terminal (18) of the photocell (8) and the inlet (14) to the tubular conductor (9) of the antenna (7) and the outlet (16) to the positive grate (2) of the device.

5. Device for electroculture according to claim 2, characterized in that the negative terminal (21) of the photocell (8) is connected to the second negative grate (3) linked to the soil.

6. Device for electroculture according to claim 2, characterized in that the regulator (13) has a low loss rectifier stage (24).

7. Device for electroculture according to claim 2, characterized in that the photocell (8) is installed at the top of the antenna (7), between the copper wire strands (10).

8. Device for electroculture according to claim 6, characterized in that the aforesaid rectifier stage (24) consists of two groups (25, 26) of diodes (27) arranged in parallel and located, respectively, between each inlet (14) and (15) and the outlet (16) of the aforesaid regulator (13).

9. Device for electroculture according to claim 8, characterized in that the aforesaid diodes (27) are low loss germanium "signal" diodes.

10. Device for electroculture according to claim 7, characterized in that the copper wire strands (10) display a diameter ranging from 2.5 to 3 millimetres.

**Patentansprüche**

1. Elektrokulturvorrichtung mit mindestens zwei Metallrosten oder -platten (2, 3), die parallel im Kulturboden (4) in nord-südlicher Richtung angeordnet sind, und einer Spannungsquelle (6) mit einer Antenne (7), von der die Metallroste (2, 3) mit einem elektrischen Strom natürlichen Ursprungs versorgt werden, Elektrokulturvorrichtung dadurch gekennzeichnet, dass die vorerwähnte Spannungsquelle, einerseits, aus der Antenne (7) zum Auffangen der Luftelektrizität und, andererseits, aus einer oder mehreren lichtelektrischen Zellen (8) besteht.

2. Elektrokulturvorrichtung gemäss Anspruch 1, dadurch gekennzeichnet, dass die von der Antenne (7) einerseits, und von der lichtelektrischen Zelle (8) andererseits, gelieferten Spannungen dem ersten positiven Rost (2) über einen Regler (13) zugeführt werden, wobei der zweite Rost (3) über einen Rohrerder (23) eng mit dem Boden verbunden ist.

3. Elektrokulturvorrichtung gemäss Anspruch 2, dadurch gekennzeichnet, dass die Antenne (7) aus einem Leitrohr (9) besteht, das von den Kupferdrahtadern (10) überragt wird, die "sonnenschirmartig" angeordnet sind, wobei das vorerwähnte Leitrohr (9) von der Erde elektrisch durch einen Isolator (12) getrennt ist.

4. Elektrokulturvorrichtung gemäss Anspruch 2, dadurch gekennzeichnet, dass der Regler (13) zwei Eingänge (14) und (15) sowie einen Ausgang (16) aufzeigt, wobei der Eingang (15) an die positive Klemme (18) der lichtelektrischen Zelle (8) , der Eingang (14) an das Leitrohr (9) der Antenne (7) und der Ausgang (16) an den positiven Rost (2) der Vorrichtung angeschlossen sind.

5. Elektrokulturvorrichtung gemäss Anspruch 2, dadurch gekennzeichnet, dass die negative Klemme (21) der lichtelektrischen Zelle (8) an den zweiten negativen, mit der Erde verbundenen Rost (3) angeschlossen ist.

6. Elektrokulturvorrichtung gemäss Anspruch 2, dadurch gekennzeichnet, dass der Regler (13) eine verlustarme Gleichrichterstufe (24) aufzeigt.

7. Elektrokulturvorrichtung gemäss Anspruch 2, dadurch gekennzeichnet, dass die lichtelektrische Zelle (8) am Scheitelpunkt der Antenne (7) zwischen den Kupferdrahtadern (10) angebracht ist.

8. Elektrokulturvorrichtung gemäss Anspruch 6, dadurch gekennzeichnet, dass die vorerwähnte Gleichrichterstufe (24) aus zwei Gruppen (25, 26) von Dioden (27) besteht, die parallel angeordnet sind und sich jeweils zwischen jedem Eingang (14 ) und (15) und Ausgang (16) des vorerwähnten Reglers befinden.

9. Elektrokulturvorrichtung gemäss Anspruch 8, dadurch gekennzeichnet, dass es sich bei den vorerwähnten Dioden (27) um verlustarme "Signal"-Germaniumdioden handelt.

10. Elektrokulturvorrichtung gemäss Anspruch 7, dadurch gekennzeichnet, dass die Kupferdrahtadern (10) einen Durchmesser aufzeigen, der zwischen 2, 5 und 3 Miillimeter liegt.

FIG. 1

FIG. 2

FIG. 3